# EUROPÄISCHE PATENTSCHRIFT

(11) **EP 2 923 547 B1**
(45) Veröffentlichungstag und Bekanntmachung des Hinweises auf die Patenterteilung: **11.07.2018**
(21) Anmeldenummer: 14198396.5
(22) Anmeldetag: 17.12.2014
(51) Int. Cl.: A01D 34/30, A01D 41/14

(54) **Schneidwerk für eine Erntemaschine**
Cutting assembly for an agricultural harvester
Barre de coupe pour une moissonneuse

(30) Priorität: 25.03.2014 DE 102014004227
(43) Veröffentlichungstag der Anmeldung: 30.09.2015
(73) Patentinhaber: CLAAS Selbstfahrende Erntemaschinen GmbH, 33428 Harsewinkel (DE)
(72) Erfinder: Flöthmann, Sebastian, 33334 Gütersloh (DE)

(56) Entgegenhaltungen:
- WO-A2-2014/023408
- DE-A1- 1 782 844
- DE-A1- 2 208 498
- DE-A1- 3 512 619
- DE-U1- 29 821 488

## Beschreibung

Die vorliegende Erfindung betrifft ein Schneidwerk für eine selbstfahrende Erntemaschine, insbesondere für einen Mähdrescher.

Ein solches Schneidwerk ist zum Beispiel aus DE 35 12 619 A1 bekannt. Dieses herkömmliche Schneidwerk umfasst einen Trägerrahmen, an dessen Vorderkante ein Messer oszillierend beweglich ist. Von dem Messer geschnittenes Erntegut fällt auf eine Bodenplatte des Trägerrahmens, um dort von einer Einzugwalze erfasst und in Richtung eines Dreschwerks des Mähdreschers weitergefördert zu werden. Ein Verteilergetriebe des Schneidwerks ist über eine einzelne Welle an einen Motor des Mähdreschers gekoppelt, um Drehmoment des Motors auf das Messer und mittels eines Treibriemens auf die Einzugwalze zu verteilen.

Die Offenlegungsschrift DE 2 208 498 A offenbart eine Antriebsanordnung für das hin- und hergehende Messer des Schneidwerks und der Einzugswalze von Mähdreschern, bei dem die hin- und hergehende Bewegung des Messers über ein Taumelgetriebe angetrieben wird.

Die Offenlegungsschrift DE 1 782 844 A sieht für den Antrieb des Messers, für den Antrieb der Einzugswalze sowie für den Antrieb der Haspel einen Antriebsriemen vor.

Der Erntevorsatz der WO 2014/023408 umfasst einen Antrieb für die Einzugsschnecke, der in der Mitte des Erntevorsatzes angeordnet ist. Zudem weist es ein Verteilergetriebe auf, das über eine Übertragungswelle mit dem Antrieb für die Einzugsschnecke verbunden ist. Das Verteilergetriebe treibt über mehrere Übertragungswellen ein Schneidwerk an.

Bei der DE 298 21 488 U1 sind der Messerantrieb über Winkelgetriebe und eine Gelenkwelle, und die Einzugsschnecke über einen Riementrieb trieblich mit einer Hauptantriebswelle verbunden.

Es besteht seit längerem die Tendenz, durch den Einsatz immer breiterer Schneidwerke den Erntevorgang zu beschleunigen und zu rationalisieren. Um ein solches breites Schneidwerk effizient nutzen zu können, muss proportional zur Breite auch die auf das Schneidwerk übertragene Antriebsleistung zunehmen. Wenn zur Leistungsübertragung ein Riementrieb verwendet wird, wie in dem eingangs erwähnten Dokument DE 35 12 619 A1 gezeigt, dann wächst mit der Breite auch die Zugkraft, die von dem Treibriemen übertragen werden muss. Um ein Rutschen des Treibriemens an den Riemenscheiben zu verhindern, ist eine hohe Riemenspannung erforderlich, die zu erhöhtem Reibverschleiß führt. Um die hohe Spannung aushalten zu können, muss auch der Querschnitt des Treibriemens vergrößert werden, was zu verstärkter Walkarbeit und infolgedessen zu einer Erhitzung des Treibriemens im Betrieb führt. Wenn es aufgrund des erhöhten Querschnitts nicht gelingt, diese Wärme mit der erforderlichen Geschwindigkeit abzuführen, führt die hohe Betriebstemperatur zu einer weiteren Verkürzung der Lebensdauer des Riemens. Aber auch an Stellen, an denen das Drehmoment nicht über Riemen, sondern über Wellen übertragen wird, macht eine Steigerung des Drehmoments eine Verstärkung der Wellen und der sie tragenden Rahmenteile erforderlich, und führt so zu einer Steigerung von Gewicht und Fertigungskosten des Schneidwerks.

Aufgabe der Erfindung ist, ein Schneidwerk für eine Erntemaschine anzugeben, das in einer großen Breite gefertigt werden kann, ohne dass die Breitensteigerung mit einer überproportionalen Zunahme an Gewicht und Kosten und/oder erhöhtem Wartungsbedarf erkauft ist.

Die Erfindung sieht vor, dass bei einem Schneidwerk für eine Erntemaschine mit einem Trägerrahmen, wenigstens einem an dem Trägerrahmen verschiebbarem Messer, einer Einzugwalze zum Fördern von von dem Messer geschnittenem Erntegut und einem Verteilergetriebe zum Verteilen von Drehmoment einer Antriebswelle auf die Einzugwalze und das Messer die Einzugwalze über ein untersetzendes Getriebe an das Verteilergetriebe gekoppelt ist. Durch das untersetzende Getriebe wird die Möglichkeit geschaffen, Antriebswelle und Verteilergetriebe bei hoher Drehzahl laufen zu lassen und so die erforderliche hohe Leistung im Verteilergetriebe bei begrenzten Drehmomenten zu übertragen und gleichzeitig die Einzugwalze bei einer bedarfsgerechten Drehzahl zu betreiben.

Zur Kraftübertragung in dem Verteilergetriebe kann zwar einer bevorzugten Ausgestaltung zu Folge ein Riemen zum Einsatz kommen, die Vorteile der Erfindung werden jedoch auch mit anderen Bauformen von Verteilergetrieben erreicht.

Die Einzugwalze ist in an sich bekannter Weise zwischen zwei Seitenwänden des Trägerrahmens gelagert. Das Schneidwerk zeichnet sich dabei dadurch aus, dass das untersetzende Getriebe zweckmäßigerweise platzsparend an einer der Seitenwände angebracht ist.

Das Schneidwerk zeichnet sich weiterhin dadurch aus, dass eine antriebsseitige Welle des untersetzenden Getriebes koaxial zu einer Achse der Einzugwalze ist. Dadurch ist es möglich, bei der Fertigung von verschiedenen Modellen von Schneidwerken in unterschiedlichen Breiten, von denen manche das untersetzende Getriebe haben und andere nicht, Kosten zu sparen, indem bei allen Modellen ein gleiches Verteilergetriebe eingesetzt wird.

Eine solche koaxiale Anordnung von antriebsseitiger Welle des untersetzenden Getriebes und Achse der Einzugwalze ist hier dadurch realisiert, dass das Getriebe ein Planetengetriebe ist.

In diese Achse kann eine Hardyscheibe eingefügt sein, um das Planetengetriebe von Taumelbewegungen der Einzugwalze zu entkoppeln, die aus Fertigungsungenauigkeiten und/oder aus elastischen Verformungen des Trägerrahmens im Betrieb resultieren können.

Das Messer ist in Anpassung an die Bodenbeschaffenheit und/oder die Art des Ernteguts positionsverstellbar; um es an das Verteilergetriebe zu koppeln, ist eine teleskopisch längenveränderliche Welle vorgesehen. Wenn das Verteilergetriebe wie oben erwähnt einen Riemen umfasst, kann dieser ein antriebsseitiges erstes Rad, ein zweites Rad des untersetzenden Getriebes sowie ein drittes Rad eines das Messer antreibenden Winkelgetriebes umschlingen.

Um in Anpassung an Dichte oder Art des Ernteguts das Verhältnis zwischen Oszillationsfrequenz des Messers und Drehzahl der Einzugwalze variieren zu können, kann das dritte Rad zwei Riemenscheiben mit unterschiedlichen Durchmessern umfassen, auf denen der Riemen wahlweise platzierbar ist, oder das dritte Rad ist austauschbar, so dass ein Benutzer das Verhältnis durch Auswählen und Montieren eines dritten Rades mit jeweils passendem Durchmesser einstellen kann.

Um Schlupf und Reibung an erstem, zweitem und drittem Rad zu begrenzen, sollten diese von dem Riemen auf einem großen Winkel umschlungen sein. Damit die Summe der Umschlingungswinkel an den drei Rädern größer als 360° werden kann, sollte ein weiteres Rad mit einer Außenseite des Riemens in Kontakt sein. Vorzugsweise handelt es sich dabei um ein zum Anpassen der Spannung des Riemens verstellbares Spannrad.

Zum Spannen des Riemens dient vorzugsweise ein doppelt wirkender Stellzylinder.

Indem eine Arbeitskammer des Stellzylinders druckbeaufschlagt oder entlastet ist, sind zwei diskrete Werte der Riemenspannung auf einfache Weise einstellbar.

Eine Umschaltung zwischen diesen verschiedenen Werten sollte bei einem Wechsel der Umlaufrichtung des Riemens erfolgen.

Um zu vermeiden, dass durch die oszillierende Messerbewegung der Trägerrahmen zu Schwingungen angeregt wird, sind vorzugsweise an dem Trägerrahmen zwei Messer angebracht und gegeneinander phasenversetzt beweglich.

Eines der Messer kann an das Verteilergetriebe über eine sich parallel zur Einzugwalze erstreckende Welle gekoppelt sein.

Zweckmäßigerweise trägt diese Welle auch das dritte Rad.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht des Vorderteils eines Mähdreschers mit einem daran montierten Schneidwerk;
- Fig. 2: eine perspektivische Ansicht des Schneidwerks von seiner Rückseite her;
- Fig. 3: eine Seitenansicht eines Teils des Schneidwerks;
- Fig. 4: eine zu Fig. 3 analoge Ansicht des Schneidwerks in einer veränderten Konfiguration;
- Fig. 5: einen axialen Schnitt durch das Planetengetriebe des Schneidwerks; und
- Fig. 6: einen in einem Verteilergetriebe des Schneidwerks verwendeten Stellzylinder .

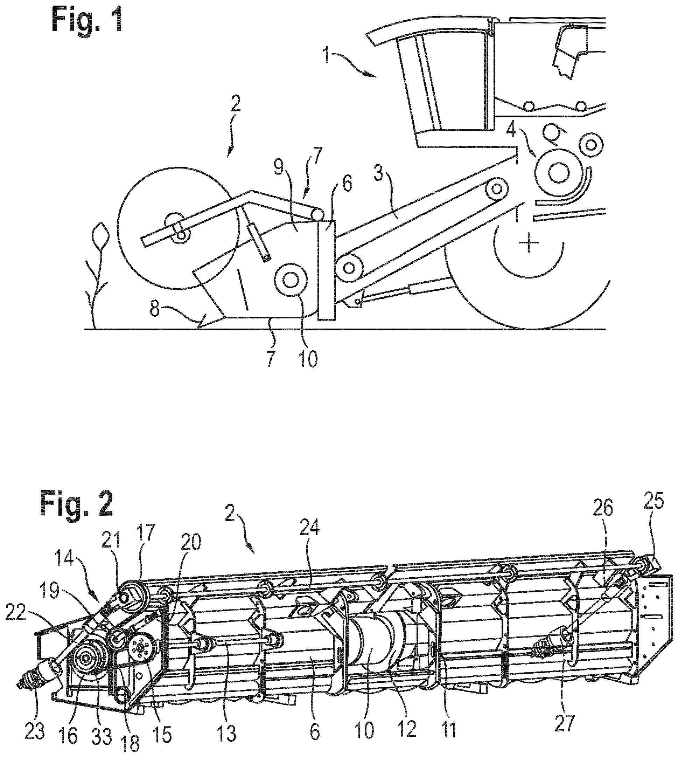

Fig. 1 zeigt in einer schematischen Seitenansicht das Vorderteil eines Mähdreschers 1, der mit einem erfindungsgemäßen Schneidwerk 2 ausgestattet ist. Der Mähdrescher 1 umfasst einen Schrägförderer 3, an dessen Vorderseite das Schneidwerk 2 austauschbar montiert ist und der von dem Schneidwerk 2 eingewonnenes Erntegut einem Dreschwerk 4 zuführt.

Ein Trägerrahmen 5 des Schneidwerks umfasst eine Rückwand 6, an der der Schrägförderer 3 angreift, eine Bodenplatte 7, die entlang einer hinteren Kante mit der Rückwand 6 verbunden ist. Wenigstens ein, vorzugsweise zwei Messer 8 sind an einer Vorderkante der Bodenplatte 7 angebracht und in Querrichtung des Trägerrahmens 5 oszillierend beweglich. Seitenwände 9 des Trägerrahmens 5 sind mit den seitlichen Rändern von Rückwand 6 und Bodenplatte 7 verbunden. An den Seitenwänden 9 ist eine Einzugwalze 10 drehbar gelagert.

In der perspektivischen Ansicht der Fig. 2 ist ein Stück der Einzugwalze 10 durch eine Öffnung 11 der Rückwand 6 hindurch zu sehen, durch die hindurch das Erntegut an den Schrägförderer 3 übergeben wird. An der Einzugwalze 10 ist ein Stück einer Wendel 12 zu erkennen, durch deren Drehung das aufgenommene Erntegut auf der Bodenplatte 7 zur Öffnung 11 hin verschoben wird.

An der Rückwand 6 ist in Fig. 2 ferner eine Antriebswelle 13 zu erkennen, deren der Öffnung 11 zugewandtes Ende, wenn das Schneidwerk 2 am Mähdrescher 1 montiert ist, an eine Zapfwelle des Mähdreschers 1 ankoppelt. Die Antriebswelle 13 treibt ein Verteilergetriebe 14 an einer der Seitenwände 9, in der Perspektive der Fig. 2 der linken Seitenwand 9 des Trägerrahmens 5. Das Verteilergetriebe 14 umfasst ein auf der Antriebswelle 13 montiertes erstes Rad 15, ein zur Einzugwalze 10 koaxiales zweites Rad 16, und ein drittes Rad 17, die von einem Riemen 18 umschlungen sind. Ein Spannrad 19 drückt gegen eine Außenseite des Riemens 18 und lenkt einen sich zwischen den Rädern 17, 15 erstreckenden Abschnitt des Riemens 18 weit in Richtung des Rades 16 aus, so dass die Räder 15, 17 jeweils auf etwas mehr als der Hälfte ihres Umfangs in Kontakt mit dem Riemen 18 sind. Dank der Auslenkung durch das Spannrad 19 addieren die Winkel, auf denen die drei Räder 15, 16, 17 von dem Riemen 18 umschlungen sind, auf ca. 480°. Dieser ausgedehnte Kontakt begünstigt die Kraftübertragung bei geringem Schlupf und trägt zu niedrigem Reibverschleiß bei. Das Spannrad 19 ist mit Hilfe eines hydraulischen Stellzylinders 20 in Längsrichtung des letzteren verstellbar, durch Beaufschlagen des Stellzylinders 20 mit Hydraulikfluid bei gegebenem Druck ist die Spannung des Riemens 18 einstellbar.

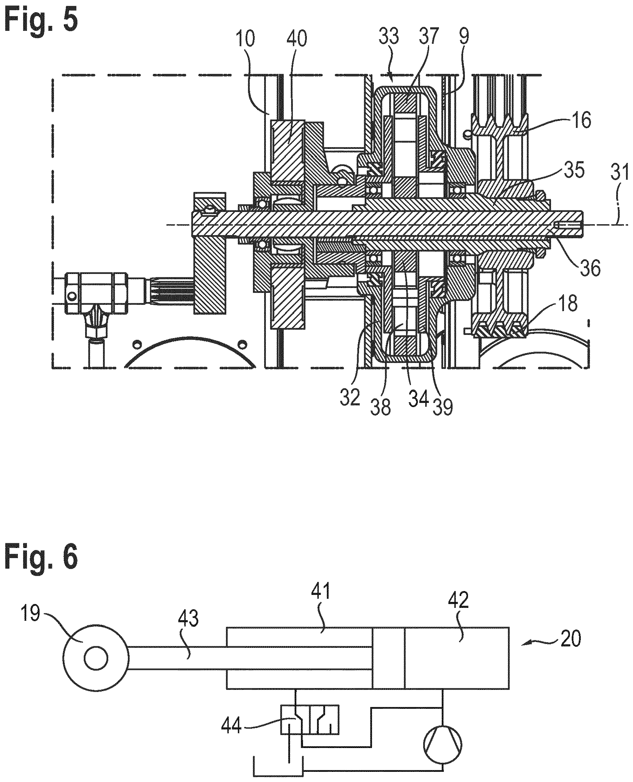

Der Stellzylinder 20 drückt das Spannrad 19 zwischen den Rädern 17, 15 gegen den Riemen 18. Wenn im Normalbetrieb des Schneidwerks das Rad 15 im Gegenuhrzeigersinn rotiert, ist die Spannung des Riemens 18 zwischen den Rädern 15 und 16 am höchsten und zwischen den Rädern 17, 15 am geringsten, und es genügt ein relativ geringer Druck des Spannrades 19, um Schlupf des Riemens 18 an den Rädern 15, 16, 17 wirksam zu begrenzen. Wenn im Schneidwerk eine Blockade auftritt, kann es nötig sein, die Drehrichtung der Einzugwalze 10 umzukehren, um steckengebliebenes Erntegut wieder auszuwerfen. Wenn hierfür das Rad 15 im Uhrzeigersinn angetrieben wird, ist die Riemenspannung zwischen den Rädern 15, 17 maximal, und eine hohe Kraft des Stellzylinders 20 ist erforderlich, um zu verhindern, dass das Spannrad 19 der Riemenspannung ausweicht. Zu diesem Zweck ist als Stellzylinder 20 hier ein doppelt wirkender Zylinder vorgesehen. Von dessen zwei Arbeitskammern 41, 42 hat, wie in Fig. 6 ersichtlich, eine, hier mit 41 bezeichnet, einen durch die hindurch verlaufende Kolbenstange 43 verminderten Querschnitt. Im Normalbetrieb sind beide Arbeitskammern 41, 42 druckbeaufschlagt, und die Kraft, die die Kolbenstange 43 auf das Spannrad 19 ausübt, entspricht der Querschnittsdifferenz der Arbeitskammern 41, 42, multipliziert mit dem in ihnen herrschenden Druck. Wenn auf Rückwärtslauf des Riemens 18 umgeschaltet wird, wird gleichzeitig die Arbeitskammer 41 durch ein Wegeventil 44 druckentlastet, so dass die auf das Spannrad 19 wirkende Kraft durch das Produkt von Querschnitt der Kammer 42 und Druck gegeben ist.

Das dritte Rad 17 treibt über ein Winkelgetriebe 21 und eine teleskopisch längenveränderliche Welle 22 ein Exzentergetriebe 23 an. Das Exzentergetriebe 23 setzt die Drehung der Welle 22 in eine in Querrichtung des Schneidwerks 2 oszillierende Bewegung des (in Fig. 2 nicht gezeigten) Messers 8 um.

Bei der hier betrachteten Ausgestaltung sind zwei Messer 8 an der Vorderkante der Bodenplatte 7, eines auf der linken Hälfte und das andere auf der rechten, vorgesehen. Das zweite Messer ist gegen das erste Messer 8 um 180° phasenversetzt angetrieben durch eine Welle 24, die sich vom dritten Rad 17 über die gesamte Breite des Schneidwerks 2 bis zur gegenüberliegenden rechten Seitenwand 9 erstreckt, ein zweites Winkelgetriebe 25, eine zweite sich entlang der rechten Seitenwand 9 erstreckende teleskopisch längenveränderliche Welle 26 und ein zweites Exzentergetriebe 27.

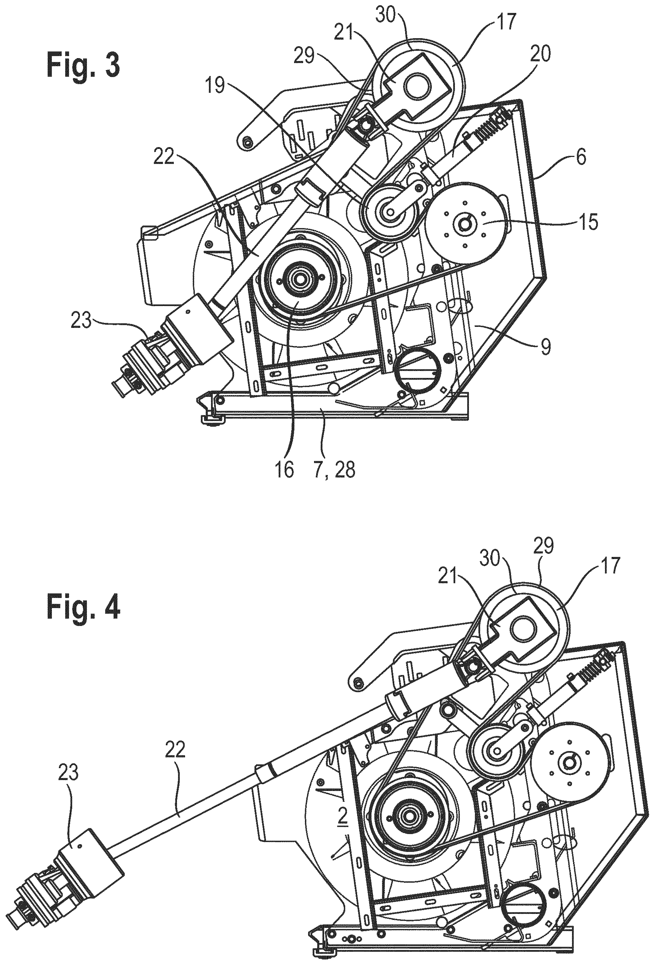

Die Bodenplatte 7 umfasst zwei gegeneinander verstellbare Segmente, ein am Trägerrahmen 5 festes hinteres Segment 28 (siehe Fig. 3) und ein in Fig. 3 nicht gezeigtes, in Fahrtrichtung des Mähdreschers verstellbares vorderes Segment, das die Messer 8 trägt. Um die Messer 8 unabhängig von der Stellung des vorderen Segments antreiben zu können, sind die Wellen 22, 26, wie in Fig. 4 gezeigt, teleskopisch ausziehbar und an das Winkelgetriebe 21 bzw. 25 und das Exzentergetriebe 23 bzw. 27 jeweils kardanisch gekoppelt.

Das dritte Rad 17 umfasst bei dem hier gezeigten Ausführungsbeispiel zwei Riemenscheiben 29, 30 von unterschiedlichem Durchmesser, wobei in der Darstellung der Figuren 2 bis 4 der Riemen 18 jeweils um die größere Riemenscheibe 29 geschlungen ist. Durch Zurückziehen des Spannrades 19 kann der Riemen 18 weit genug entspannt werden, um von Hand auf die kleinere Riemenscheibe 30 umgelegt werden zu können. Indem anschließend der Stellzylinder 20 mit einem vorgegebenen Druck beaufschlagt wird, wird die für die wirksame Kraftübertragung in dem Verteilergetriebe 14 erforderliche Spannung des Riemens 18 wieder hergestellt.

Einer nicht gezeichneten Abwandlung zufolge kann das Rad 17 auch eine einfache Riemenscheibe sein, ist aber an der Welle lösbar montiert, so dass ein Benutzer es gegen ein Rad mit anderem Durchmesser austauschen kann, wenn er das Verhältnis zwischen der Bewegungsfrequenz der Messer 8 und der Drehzahl der Einzugwalze 10 verändern will. Bei dieser Abwandlung sind zweckmäßigerweise die Plätze von Rad 17 und Winkelgetriebe 21 an der Welle 24 vertauscht, so dass das Rad 17 sich an einem freien Ende der Welle 24 befindet, von wo es leicht abgezogen und gegen ein anderes Rad ausgewechselt werden kann.

Fig. 5 zeigt einen axialen Schnitt durch die linke Seitenwand 9 in Höhe einer gemeinsamen Drehachse 31 des zweiten Rades 16 und der Einzugwalze 10 (von der in Fig. 5 nur eine der Seitenwand 9 zugewandte Stirnwand zu sehen ist). In einer Öffnung der Seitenwand 9 ist ein Gehäuse 32 eines Planetengetriebes 33 drehfest montiert. Das Rad 16 und ein Sonnenrad 34 des Planetengetriebes 33 sind auf einer gemeinsamen Hohlwelle 35 montiert. Innerhalb der Hohlwelle 35 erstreckt sich eine Welle 36. Das Sonnenrad 34 und ein am Gehäuse 32 festes Hohlrad 37 kämmen mit Planetenrädern 38, um die Drehung eines Planetenträgers 39 anzutreiben. Dieser ist an die Einzugwalze 10 über eine Hardyscheibe 40 gekoppelt, um Taumelbewegungen der Drehachse der Einzugwalze 10 in Bezug auf die Drehachse 31 aufzufangen, die im Betrieb aus durch Fertigungstoleranzen bedingten Lauffehlern und/oder aus dynamischen Verformungen des Trägerrahmens 5 resultieren.

### Bezugszeichen

- 1: Mähdrescher
- 2: Schneidwerk
- 3: Schrägförderer
- 4: Dreschwerk
- 5: Trägerrahmen
- 6: Rückwand
- 7: Bodenplatte
- 8: Messer
- 9: Seitenwand
- 10: Einzugwalze
- 11: Öffnung
- 12: Wendel
- 13: Antriebswelle
- 14: Verteilergetriebe
- 15: erstes Rad
- 16: zweites Rad
- 17: drittes Rad
- 18: Riemen
- 19: Spannrad
- 20: Stellzylinder
- 21: Winkelgetriebe
- 22: Welle
- 23: Exzentergetriebe
- 24: Welle
- 25: Winkelgetriebe
- 26: Welle
- 27: Exzentergetriebe
- 28: hinteres Segment
- 29: Riemenscheibe
- 30: Riemenscheibe
- 31: Drehachse
- 32: Gehäuse
- 33: Planetengetriebe
- 34: Sonnenrad
- 35: Hohlwelle
- 36: Welle
- 37: Hohlrad
- 38: Planetenrad
- 39: Planetenträger
- 40: Hardyscheibe
- 41: Arbeitskammer
- 42: Arbeitskammer
- 43: Kolbenstange
- 44: Wegeventil

## Patentansprüche

1. Schneidwerk für eine Erntemaschine mit einem Trägerrahmen (5), wenigstens einem an dem Trägerrahmen (5) verschiebbaren Messer (8), einer Einzugwalze (10) zum Fördern von von dem Messer (8) geschnittenem Erntegut und einem Verteilergetriebe (14) zum Verteilen von Drehmoment einer Antriebswelle (13) auf die Einzugwalze (10) und das Messer (8), wobei das Messer (8) an dem Trägerrahmen (5) positionsverstellbar und mittels einer teleskopisch längenveränderlichen Welle (22, 26) an das Verteilergetriebe (14) gekoppelt ist, wobei die Einzugwalze (10) zwischen zwei Seitenwänden (9) des Trägerrahmens (5) gelagert, und über ein untersetzendes Getriebe (33) an das Verteilergetriebe (14) gekoppelt ist, **dadurch gekennzeichnet, dass** eine antriebsseitige Welle des Getriebes (33) koaxial zu einer Achse (31) der Einzugwalze (10) ist, und dass das Getriebe (33) ein Planetengetriebe ist, und an einer der Seitenwände (9) angebracht ist.

2. Schneidwerk nach Anspruch 1, **dadurch gekennzeichnet, dass** in eine gemeinsame Achse von Getriebe (33) und Einzugwalze (10) eine Hardyscheibe (40) eingefügt ist.

3. Schneidwerk nach einem der vorhergehenden Ansprüche, **dadurch gekennzeichnet, dass** das Verteilergetriebe (14) einen Riemen (18) umfasst, der ein antriebsseitiges erstes Rad (15), ein zweites Rad (16) des untersetzenden Getriebes (33) und ein drittes Rad (17) eines das Messer antreibenden Winkelgetriebes (21) umschlingt.

4. Schneidwerk nach Anspruch3, **dadurch gekennzeichnet, dass** das dritte Rad (17) zwei Riemenscheiben (29, 30) mit unterschiedlichen Durchmessern umfasst.

5. Schneidwerk nach Anspruch 3, **dadurch gekennzeichnet, dass** das dritte Rad (17) austauschbar montiert ist.

6. Schneidwerk nach Anspruch 3, 4 oder 5, **dadurch gekennzeichnet, dass** das erste, zweite und dritte Rad (15, 16, 17) mit einer Innenseite des Riemens (18) in Kontakt sind und ein verstellbares Spannrad (19) mit einer Außenseite des Riemens (18) in Kontakt ist.

7. Schneidwerk nach einem der Ansprüche 3 bis 6, **dadurch gekennzeichnet, dass** der Riemen (18) durch einen doppelt wirkenden Stellzylinder (20) gespannt ist.

8. Schneidwerk nach Anspruch 7, **dadurch gekennzeichnet, dass** eine Arbeitskammer (41) des Stellzylinders (20) je nach Umlaufrichtung des Riemens (18) druckbeaufschlagt oder entlastet ist.

9. Schneidwerk nach einem der vorhergehenden Ansprüche, **dadurch gekennzeichnet, dass** an dem Trägerrahmen (5) zwei Messer (8) angebracht und gegeneinander phasenversetzt beweglich sind.

10. Schneidwerk nach Anspruch 9, **dadurch gekennzeichnet, dass** eines der Messer (8) an das Verteilergetriebe (14) über eine sich parallel zur Einzugwalze (10) erstreckende Welle (24) gekoppelt ist.

11. Schneidwerk nach Anspruch 10, **dadurch gekennzeichnet, dass** die Welle (24) das dritte Rad (17) trägt.

## Claims

1. Cutterbar for a harvester with a carrier frame (5), at least one blade (8) that is displaceable on the carrier frame (5), a feed roller (10) for conveying harvested material cut by the blade (8) and a transfer gearbox (14) for transferring torque of a drive shaft (13) to the feed roller (10) and the blade (8), wherein the blade (8) is adjustable in position on the carrier frame (5) and is coupled to the transfer gearbox (14) by means of a shaft (22, 26) the length of which is telescopically adjustable, wherein the feed roller (10) is mounted between two side walls (9) of the carrier frame (5) and is coupled to the transfer gearbox (14) via a reduction gear unit (33), **characterized in that** a drive-end shaft of the gear unit (33) is coaxial with an axis (31) of the feed roller (10), and **in that** the gear unit (33) is a planetary gear and is attached to one of the side walls (9).

2. Cutterbar according to claim 1, **characterized in that** a flexible disc (40) is inserted into a common axle of gear unit (33) and feed roller (10).

3. Cutterbar according to one of the previous claims, **characterized in that** the transfer gearbox (14) comprises a belt (18), which loops around a drive-end first wheel (15), a second wheel (16) of the reduction gear unit (33) and a third wheel (17) of an angular gear (21) driving the blade.

4. Cutterbar according to claim 3, **characterized in that** the third wheel (17) comprises two belt pulleys (29, 30) with different diameters.

5. Cutterbar according to claim 3, **characterized in that** the third wheel (17) is mounted to be replaceable.

6. Cutterbar according to claim 3, 4 or 5, **characterized in that** the first, second and third wheels (15, 16, 17) are in contact with an inner side of the belt (18) and an adjustable tensioning wheel (19) is in contact with an outer side of the belt (18).

7. Cutterbar according to one of claims 3 to 6, **characterized in that** the belt (18) is tensioned by a double-acting positioning cylinder (20).

8. Cutterbar according to claim 7, **characterized in that** a working chamber (41) of the positioning cylinder (20) is subjected to pressure or relieved of pressure depending on the direction of circulation of the belt (18).

9. Cutterbar according to one of the previous claims, **characterized in that** two blades (8) are attached to the carrier frame (5) and are movable with respect to each other in a phase-shifted manner.

10. Cutterbar according to claim 9, **characterized in that** one of the blades (8) is coupled to the transfer gearbox (14) via a shaft (24) extending parallel to the feed roller (10).

11. Cutterbar according to claim 10, **characterized in that** the shaft (24) carries the third wheel (17).

## Revendications

1. Tablier de coupe pour une machine de récolte, comprenant un cadre porteur (5), au moins une lame (8) coulissant sur le cadre porteur (5), un rouleau d'alimentation (10) pour convoyer du produit récolté coupé par la lame (8) et un boîtier de transfert (14) pour transférer le moment de rotation d'un arbre d'entraînement (13) au rouleau d'alimentation (10) et à la lame (8), la lame (8) étant couplée au cadre porteur (5) avec un positionnement réglable et au boîtier de transfert (14) au moyen d'un arbre à longueur télescopiquement variable (22, 26), le rouleau d'alimentation (10) étant monté entre deux parois latérales (9) du cadre porteur (5) et étant couplé au boîtier de transfert (14) par l'intermédiaire d'un engrenage réducteur (33), **caractérisé en ce qu'**un arbre côté entraînement de l'engrenage (33) est coaxial à un axe (31) du rouleau d'alimentation (10), et **en ce que** l'engrenage (33) est un engrenage planétaire et est monté sur une des parois latérales (9).

2. Tablier de coupe selon la revendication 1, **caractérisé en ce que** sur un axe commun de l'engrenage (33) et du rouleau d'alimentation (10) est inséré un disque flexible Hardy (40).

3. Tablier de coupe selon une des revendications précédentes, **caractérisé en ce que** le boîtier de transfert (14) comprend une courroie (18) qui entoure une première roue côté entraînement (15), une deuxième roue (16) de l'engrenage réducteur (33) et une troisième roue (17) d'un engrenage angulaire (21) entraînant la lame.

4. Tablier de coupe selon la revendication 3, **caractérisé en ce que** la troisième roue (17) comprend deux poulies à courroie (29, 30) de diamètres différents.

5. Tablier de coupe selon la revendication 3, **caractérisé en ce que** la troisième roue (17) est montée de manière échangeable.

6. Tablier de coupe selon la revendication 3, 4 ou 5, **caractérisé en ce que** les première, deuxième et troisième roues (15, 16, 17) sont en contact avec un côté intérieur de la courroie (18), et une roue de tension réglable (19) est en contact avec un côté extérieur de la courroie (18).

7. Tablier de coupe selon une des revendications 3 à 6, **caractérisé en ce que** la courroie (18) est tendue par l'intermédiaire d'un vérin de réglage à double effet (20).

8. Tablier de coupe selon la revendication 7, **caractérisé en ce que**, selon le sens de rotation de la courroie (18), une chambre de travail (41) du vérin de réglage (20) est mise en pression ou soulagée.

9. Tablier de coupe selon une des revendications précédentes, **caractérisé en ce que** deux lames (8) sont montées sur le cadre porteur (5) et sont mobiles l'une par rapport à l'autre de manière déphasée.

10. Tablier de coupe selon la revendication 9, **caractérisé en ce qu'**une des lames (8) est couplée au boîtier de transfert (14) par l'intermédiaire d'un arbre (24) s'étendant parallèlement au rouleau d'alimentation (10).

11. Tablier de coupe selon la revendication 10, **caractérisé en ce que** l'arbre (24) porte la troisième roue (17).
